# EUROPÄISCHE PATENTANMELDUNG

(11) **EP 1 617 256 A1**
(43) Veröffentlichungstag der Anmeldung: **18.01.2006**
(21) Anmeldenummer: 04023500.4
(22) Anmeldetag: 01.10.2004
(51) Int. Cl.: G02B 21/00, G02B 21/06, G02B 21/14

(54) **Lichtrastermikroskop mit linienförmiger Beleuchtung und Verwendung des Mikroskops**

(30) Priorität: 16.07.2004 DE 102004034971
(71) Anmelder: CARL ZEISS JENA GmbH, 07745 Jena (DE)
(72) Erfinder: Wolleschensky, Ralf, 99510 Apolda (DE)
(74) Vertreter: Geyer, Fehners & Partner

(57) **Zusammenfassung**

Bei einem Lichtrastermikroskop mit einer linienförmiger Beleuchtung (2), die einen Beleuchtungsstrahl zum punkt- oder punktgruppenförmigen Beleuchten einer Probe (23) bereitstellt, einer Scananordnung (3, 4), die den punkt- oder punktgruppenförmigen Beleuchtungsstrahl scannend über die Probe (23) führt, einer Spot-Detektoranordnung (5), die über die Scananordnung (3, 4) den beleuchteten Punkt- oder Punktgruppenpot der Probe (23) mittels mindestens einer konfokalen Blende (26) auf mindestens eine Detektoreinheit (28) abbildet, und einer Steuereinheit, die die Scananordnung (3, 4) ansteuert und die Spot-Detektoranordnung (5) ausliest, ist vorgesehen, daß zusätzlich eine Weitfeldbeleuchtungsquelle (29, 34) vorgesehen ist, die die Probe (23) beleuchtet, und das die Steuereinheit bei Betrieb der Weitfeldbeleuchtungsquelle (29, 34) die Scananordnung (3, 4) so ansteuert und die Spot-Detektoranordnung (5) so ausliest, daß ein Bild der weitfeldbeleuchteten Probe (23) gewonnen ist.

## Beschreibung

Die Erfindung bezieht sich auf ein konfokales Laserscanningmikroskop mit einer Spot-Beleuchtungsanordnung, die einen Beleuchtungsstrahl zum punkt- oder punktgruppenförmigen Beleuchten einer Probe bereitstellt, einer Scananordnung, die den punkt- oder punktgruppenförmigen Beleuchtungsstrahl scannend über die Probe führt, einer Spot-Detektoranordnung, die über die Scananordnung den beleuchteten Punkt- oder Punktgruppenspot der Probe mittels mindestens einer konfokalen Blende auf mindestens eine Detektoreinheit abbildet, und einer Steuereinheit, die die Scananordnung ansteuert und die Spot-Detektoranordnung ausliest.

Die Erfindung bezieht sich weiter auf ein Verfahren zur Laserscanningmikroskopie, wobei ein Bild einer Probe durch Scannen und konfokaler Abbildung eines Punkt- oder Punktgruppenspots erzeugt wird und Mittel zur gescannten punkt- oder punktgruppenförmigen Proben beleuchtung vorgesehen werden.

Konfokale Laserscanningmikroskope der eingangs genannten Art sind im Stand der Technik bekannt, beispielhalber sei hierzu auf die DE 197 02 753 A1 verwiesen. In jüngster Zeit wurden vermehrt mikroskopische Aufbauten, insbesondere konfokal abbildende Laserscanningmikroskope, für spektroskopische Aufnahmetechniken eingesetzt. Auf diese Weise ist es möglich, die spektroskopischen Eigenschaften eines ausgewählten Probenbereichs zerstörungs- und berührungslos zu vermessen. Die konfokale optische Mikroskopie ermöglicht dabei die selektive Detektion optischer Signale, welche innerhalb eines beugungsbegrenzten Konfokalvolumens erzeugt werden, dessen Größe im Mikrometerbereich liegt. Laserscanningmikroskope mit abtastenden Laserstrahlen und/oder Probenvorschubeinheiten können mit hoher Ortsauflösung zwei- oder dreidimensionale Darstellungen der untersuchten Probe erzeugen. Durch diese Eigenschaft hat sich die konfokale Laserscanningmikroskopie für fluoreszierende Proben im biomedizinischen Bereich nahezu als Standard durchgesetzt.

Über die genannte Fluoreszenzmessung hinaus sieht die genannte DE 197 02 753 A1 auch vor, eine Transmissionsmessung an der Probe durchzuführen. Dazu ist ein Detektor aktivierbar, der bezogen auf die Beleuchtungsrichtung der gescannten Laserstrahlung unter der Probe liegt und der den transmittierten Anteil der über den Scanner eingestrahlten punktförmigen Strahlung aufnimmt. Dadurch wird ein sogenannter "Durchlichtscan" realisiert. Die optische Einbindung des unter der Probe liegenden Detektors bereitet gewisse Schwierigkeiten, insbesondere da man am Mikroskopteil des Laserscanningmikroskopes üblicherweise auch einen optischen Einblick für einen Beobachter vorsieht. Dies hat zur Folge, daß eine Umschaltung zwischen der Beleuchtung für die normale Mikroskopie und dem separaten Detektor für den Durchlichtscan erforderlich ist.

Der Erfindung liegt die Aufgabe zugrunde, ein Mikroskop der eingangs genannten Art so weiterzubilden, daß Transmissionsmessungen an der Probe ohne erhöhten Aufwand vorgenommen werden können.

Diese Aufgabe wird erfindungsgemäß mit einem Laserscanningmikroskop der eingangs genannten Art gelöst, bei dem zusätzlich eine Weitfeldbeleuchtungsquelle vorgesehen ist, die die Probe beleuchtet, und bei dem die Steuereinheit bei Betrieb der Weitfeldbeleuchtungsquelle die Scananordnung so ansteuert und die Spot-Detektoranordnung so ausliest, daß ein Bild der weitfeldbeleuchteten Probe (23) gewonnen ist.

Die Erfindung wird weiter mit einem Verfahren zur Laserscanningmikroskopie der eingangs genannte Art gelöst, bei dem die Probe weitfeldbeleuchtet wird und durch Scannen des Punkt- oder Punktgruppenspots abgebildet wird.

Die Erfindung setzt also nunmehr erstmals eine Weitfeldbeleuchtung in Kombination mit einer gescannten Detektion ein. Mit dieser überraschend einfachen Maßnahme wird ein separater Detektor verzichtbar. Gleichzeitig erreicht man eine Fülle von Vorteilen.

Für die Weitfeldbeleuchtung können Strahlungsquellen verwendet werden, die am Laserscanningmikroskop für normale optische Beobachtung ohnehin vorhanden sind. Ein Umschaltmechanismus wird nicht mehr benötigt. Es ergibt sich also insgesamt eine bauliche Vereinfachung. Vorzugsweise wird die Weitfeldbeleuchtungsquelle eine Durchlichtbeleuchtung der Probe realisieren. Alternativ und zusätzlich ist natürlich auch eine Weitfeld-Auflichtbeleuchtung möglicht, um beispielsweise Epi-Fluoreszenzmessungen oder Reflexionsmessungen durchzuführen. Auch kann man beide Modi (Auf- und Durchlicht) gleichzeitig realisieren.

Die Tiefendiskreminierungsfähigkeit der konfokalen Detektoranordnung läßt im übrigen erstmals eine tiefenaufgelöste Transmissionsmessung zu.

Durch den Einsatz der meist ohnehin vorhandenen Weitfeldbeleuchtungsquellen, die üblicherweise verglichen mit dem zum Scannen vorgesehenen Anregungsbeleuchtungsquellen sehr breitbandig sind, kann ein Weißlicht-Durchlichtbetrieb realisiert werden, der aufgrund der Erfordernisse konfokaler Abbildung in herkömmlichen Laserscanningmikroskopen so nicht oder nur unter enormem lichtquellenseitigen Aufwand möglich war. Gleiches gilt analog hinsichtlich Weitfeld-Auflichtfluoreszenzanregung.

Durch die Abtastung der weitfeldbeleuchteten Probe mit den gescannten Detektoren kann eine in einem Laserscanningmikroskop vorhandene spektrale Analysefähigkeit der Detektoranordnung auch im Transmissionsbetrieb ausgenutzt werden, was zu einer besseren Probencharakterisierung führt. Es ist deshalb eine Weiterbildung bevorzugt, bei der die Spot-Detektoranordnung mehrere spektrale Kanäle aufweist.

Die Weitfeldbeleuchtung kann unabhängig von der gescannten spotförmigen Beleuchtung betrieben werden. Natürlich kann die Steuereinheit auch einen gleichzeitigen Betrieb einleiten, in dem dann die Probe gleichzeitig im Transmissions- wie auch im herkömmlichen Fluoreszenzbetrieb analysiert wird.

Beispielsweise kann die Steuereinheit verschiedene spektrale Kanäle geeignet auslesen, so daß in einigen spektralen Kanälen Fluoreszenzinformation über die Probe, in anderen spektralen Kanälen Transmissionsinformation anfällt. Eine geeignete Zusammenführung dieser Information, beispielsweise in einem überlagerten Bild, gibt eine herkömmlichen Systemen überlegene Probenanalyse. Es ist deshalb bevorzugt, daß die Steuereinheit die Spot-Beleuchtungsanordnung und die Weitfeldbeleuchtungsquelle simultan im Betrieb steuert und die spektralen Kanäle der Spot-Detektoranordnung geeignet ausliest.

Ein weiterer Vorteil des erfindungsgemäßen Ansatzes liegt darin, daß nun auch an mehreren Punkten gleichzeitig ein Durchlichtscan möglich ist, was herkömmliche, unter der Probe angeordneten separaten Detektoren mangels geeigneter Ortsauflösung nicht erlaubten. Die nun durch die Erfindung eröffnete Verwendung eines Multipunkt- oder Punktgruppenscanners im Durchlichtbetrieb mindert eventuelle Probleme durch zeitliche Fluktuationen der Weitfeldbeleuchtung, da diese durch geeignete Verlängerung der Integrationszeit bei Mehrpunkt- oder Punktgruppensystemen ausgeglichen werden kann. Es ist deshalb bevorzugt, daß die Weitfeldbeleuchtung und die gescannte punkt- oder punktgruppenförmige Beleuchtung gleichzeitig vorgenommen werden. Unter Punktgruppe wird dabei jede Anordnung von mehreren Punkten verstanden, insbesondere in Form einer Linie, die das Laserscanningmikroskop konfokal beleuchtet und abbildet. Durch diesen Ansatz werden weiter vorteilhaft geringere Probenbelastungen bzw. kürzere Meßzeiten realisiert, die im Stand der Technik so nicht möglich waren. Es ist deshalb besonders bevorzugt, daß die Spot-Detektoranordnung eine konfokale Punktgruppenabbildung verwirklicht, z. B. mit mindestens einer Nipkow-Scheibe und mindestens einem Matrixdetektor.

Hier wird auf Multipunkt oder Nipkow Anordnungen in US 6.028.306, WO 88 07695 oder DE 2360197 A1 verwiesen, die in die Offenbarung einbezogen werden. Gleichfalls einbezogen sind Resonanzscanneranordnungen wie in Pawley, Handbook of Biological Confocal Microscopy , Plenum Press 1994, Seite 461ff beschrieben.

Auch kann die Spotdetektoranordnung auch eine konfokale Schlitzblende mit einem Zeilendetektor verwenden, wenn eine Linie als Punktgruppe dinet.

Die Verwendung einer Weitfeldbeleuchtung erschließt schließlich völlig neue Kontrastierungsverfahren für die Durchlichtmessung. Es sind jetzt alle Kontrastierungsverfahren möglicht, wie sie im Stand der Technik für herkömmliche optische Lichtmikroskope bekannt sind. Um dies zu realisieren, ist es zu bevorzugen, daß die Weitfeldbeleuchtungsquelle einen Kondensor aufweist, in den Kontrastierungsmittel schaltbar sind. Beispielsweise kann man Dunkelfeldbeleuchtung realisieren, indem im Kondensor eine geeignete Ringlende angeordnet wird.

Es sind aber auch noch weitere Kontrastierungsmethoden denkbar, wenn die Scananordnung ein Scanobjektiv aufweist, in dessen Pupillenebene geeignete Kontrastierungsmittel schaltbar sind. In Kombination mit der Einbringung von Kontrastierungsmitteln in den Kondensor sind dann nicht nur Dunkelfeldkontrast, sondern auch Phasenkontrast, VAREL-Kontrast, Polarisationskontrast oder Differentialinterferenzkontrast möglich.

Die Erfindung wird nachfolgend unter Bezugnahme auf die Zeichnungen beispielshalber noch näher erläutert. In den Zeichnungen zeigen:
- Fig. 1: eine schematische Darstellung eines punktscannenden Laserscanningmikroskops,
- Fig. 2: eine schematische Darstellung eines Punktgruppen scannenden Laserscanningmikroskops,
- Fig. 3: eine schematische Darstellung des Laserscanningmikroskops der Figur 2 in einer ersten Schnittebene,
- Fig. 4: einen Hauptstrahlteiler des Laserscanningmikroskops der Fig. 2.

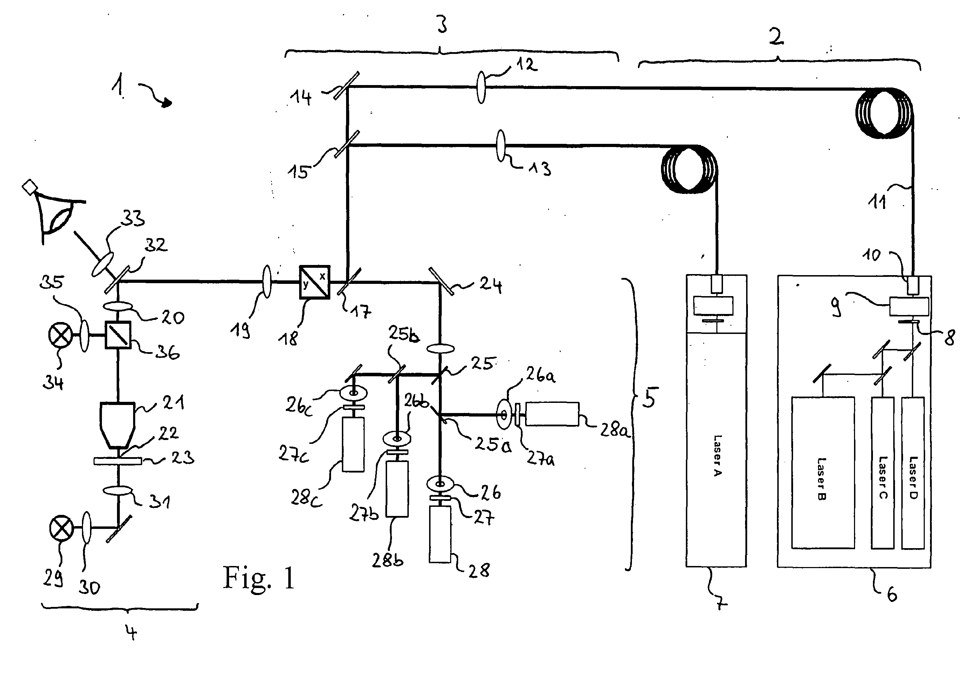

Figur 1 zeigt schematisch ein Laserscanningmikroskop 1, das im wesentlichen aus fünf Komponenten aufgebaut ist: einem Strahlungsquellenmodul 2, das Anregungsstrahlung für die Laserscanningmikroskopie erzeugt, einem Scanmodul 3, das die Anregungsstrahlung konditioniert und zum Scannen über eine Probe geeignet ablenkt, einem Mikroskopmodul 4, das die vom Scanmodul bereitgestellte scannende Strahlung in einem mikroskopischen Strahlengang auf eine Probe richtet, sowie einem Detektormodul 5, das optische Strahlung von der Probe erhält und detektiert. Das Detektormodul 5 kann dabei, wie es in Figur 1 dargestellt ist, spektral mehrkanalig ausgeführt sein.

Das Strahlungsquellenmodul 2 erzeugt Beleuchtungsstrahlung, die für die Laserscanningmikroskopie geeignet ist, also insbesondere Strahlung, die Fluoreszenz auslösen kann. Je nach Applikation weist das Strahlungsquellenmodul dazu mehrere Strahlungsquellen auf. In einer dargestellten Ausführungsform werden zwei Laser 6 und 7 im Strahlungsquellenmodul 2 vorgesehen, denen jeweils ein Lichtventil 8 sowie ein Abschwächer 9 nachgeschaltet sind und die ihre Strahlung über eine Koppelstelle 10 in eine Lichtleitfaser 11 einkoppeln. Das Lichtventil 8 wirkt als Strahlablenker, mit dem eine Strahlabschaltung bewirkt werden kann, ohne den Betrieb der Laser in der Lasereinheit 6 bzw. 7 selbst abschalten zu müssen. Das Lichtventil 8 ist beispielsweise als AOTF ausgebildet, das zur Strahlabschaltung den Laserstrahl vor der Einkopplung in die Lichtleitfaser 11 in Richtung einer nicht dargestellten Lichtfalle ablenkt.

In der beispielhaften Darstellung der Figur 1 weist die Lasereinheit 6 drei Laser B, C, D auf, wohingegen die Lasereinheit 7 nur einen Laser A beinhaltet. Die Darstellung in Figur 6 und 7 ist also beispielhaft für eine Kombination aus Einzel- und Multiwellenlängenlaser, die einzeln oder auch gemeinsam an eine oder mehrere Fasern angekoppelt sind. Auch kann die Ankopplung über mehrere Fasern gleichzeitig erfolgen, deren Strahlung später nach Durchlaufen einer Anpaßoptik durch Farbvereiniger gemischt wird. Es ist somit möglich, verschiedenste Wellenlängen oder -bereiche für die Anregungsstrahlung zu verwenden.

Die in die Lichtleitfaser 11 eingekoppelte Strahlung wird mittels verschieblichen Kollimationsoptiken 12 und 13 über Strahlvereinigungsspiegel 14, 15 zusammengeführt.

Die Kollimatoren 12, 13 sorgen dafür, daß die vom Strahlungsquellenmodul 2 an das Scanmodul 3 zugeführte Strahlung in einen Unendlichstrahlengang kollimiert wird. Dies erfolgt jeweils vorteilhaft mit einer einzelnen Linse, die durch Verschiebung entlang der optischen Achse unter Steuerung (einer nicht dargestellten) zentralen Ansteuereinheit eine Fokussierungsfunktion hat, indem der Abstand zwischen Kollimator 12, 13 und dem jeweiligen Ende der Lichtleitfaser veränderbar ist.

Dieser Beleuchtungsstrahl dient als Anregungsstrahlung und wird über einen Hauptfarbteiler 17 zu einem Scanner 18 geleitet. Auf den Hauptfarbteiler wird später noch eingegangen, hier sei lediglich erwähnt, daß er die Funktion hat, vom Mikroskopmodul 4 zurückkehrende Probenstrahlung von der Anregungsstrahlung zu trennen.

Der Scanner 18 lenkt den Strahl zweiachsig ab, wonach er durch ein Scanobjektiv 19 sowie eine Tubuslinse 20 und ein Objektiv 21 in einen Fokus 22 gebündelt wird, der in einem Präparat bzw. in einer Probe 23 liegt. Die optische Abbildung erfolgt dabei so, daß die Probe 23 in einem Brennpunkt mit Anregungsstrahlung beleuchtet wird.

Derart im linienförmigen Fokus 22 angeregte Fluoreszenz-Strahlung gelangt über das Objektiv 21, die Tubuslinse 20 und das Scanobjektiv 19 zurück zum Scanner 18, so daß in Rückrichtung nach dem Scanner 18 wieder ein ruhender Strahl vorliegt. Man spricht deshalb auch davon, daß der Scanner 18 die Fluoreszenz-Strahlung descannt.

Der Hauptfarbteiler 17 läßt die in anderen Wellenlängenbereichen als die Anregungsstrahlung liegende Fluoreszenz-Strahlung passieren, so daß sie über einen Umlenkspiegel 24 im Detektormodul 5 umgelenkt und dann analysiert werden kann. Das Detektormodul 5 weist in der Ausführungsform der Figur 1 vier spektrale Kanäle auf, d.h. die vom Umlenkspiegel 24 kommende Fluoreszenz-Strahlung wird mittels Nebenfarbteilern 25, 25a, 25b, 25c in vier spektrale Kanäle aufgeteilt.

Jeder spektrale Kanal weist eine konfokale Pinholeblende 26 auf, die eine konfokale Abbildung bezüglich der Probe 23 realisiert und deren Größe die Tiefenschärfe, mit der die Strahlung detektiert werden kann, festlegt. Die Geometrie der Blende 26 bestimmt somit die Schnittebene innerhalb des (dicken) Präparates, aus der Strahlung detektiert wird.

Der Blende 26 ist noch ein Blockfilter 27 nachgeordnet, das unerwünschte, in das Detektormodul 5 gelangte Anregungsstrahlung abblockt. Die derart abseparierte, aus einem bestimmten Tiefenabschnitt stammende, zeilenförmig aufgefächerte Strahlung wird dann von einem geeigneten Detektor 28 analysiert. Analog zum geschilderten ersten Farbkanal sind auch die weiteren spektralen Detektionskanäle aufgebaut, die ebenfalls eine Pinholeblende 26a bzw. 26b, 26c, ein Blockfilter 27a bzw. 27b, 27c, sowie einen Detektor 28a bzw. 28b, 28c umfassen.

Neben der konfokalen Abtastung eines mit einen Brennpunkt oder -linie beleuchteten Probenbereiches ermöglicht das Laserscanningmikroskop 1 der Figur 1 in der dargestellten, diesbezüglich optionalen Bauweise auch eine weitere Meßbetriebsart. Dazu ist eine Halogenleuchte 29 vorgesehen, deren Strahlung über eine Lampenoptik 30 und einen Kondensor 31 entgegen der Blickrichtung der Scanoptik 19 auf die Probe 23 in einer Weitfeldbeleuchtung gerichtet wird. Von dieser Beleuchtung transmittierte Anteile werden ebenfalls durch das Objektiv 21, die Tubuslinse 20, das Scanobjektiv 19 und den Scanner 18 im Scanverfahren abgetastet und mittels des Hauptfarbteilers 17 und der Nebenfarbteiler im Detektormodul 5 spektral analysiert. Die Detektion über den Scanner 18 bewirkt die Ortsauflösung in Form der Probenabtastung, und zugleich ist eine Weitfeldbeleuchtung über die Halogenlampe 29 möglich.

Das gleiche Konzept kann auch zur Auswertung rückreflektierter Strahlung und Epifluoreszenz-Strahlung eingesetzt werden, in dem über eine Quecksilberdampflampe 34 mit Lampenoptik 35 an einem Strahlteiler 36 Beleuchtungsstrahlung in den Tubus des Mikroskopmoduls 4 eingekoppelt wird. Diese Strahlung gelangt dann über das Objektiv 21 auf die Probe 23. Auch hier erfolgt die Beleuchtung ohne Mitwirkung des Scanners 18. Die Detektion erfolgt dagegen wiederum über die Scanoptik 19 und den Scanner 18 im Detektormodul 5. Das Detektormodul 5 hat für diese Weiterbildung somit eine Doppelfunktion, zum einen dient es als Detektor für gescannt eingestrahlte Anregungsstrahlung. Zum anderen wirkt das Detektormodul 5 als ortsauflösender Detektor, wenn auf die Probe nicht weiter strukturierte Strahlung eingestrahlt wird, nämlich entweder als Weitfeldbeleuchtung von unten oder über das Objektiv 21. Aber auch der Scanner 18 hat doppelte Wirkung, da er die Ortsauflösung durch punktförmige Abtastung der Probe nicht nur bei punktförmig eingestrahlter Anregungsstrahlung, sondern auch bei Weitfeldbeleuchtung erreicht.

Durch diesen Ansatz können nicht gescannte Detektoren in Transmissions- oder Auflichtbetriebsweise am Mikroskopmodul 4 eingespart werden.

Darüber hinaus ermöglicht das Laserscanningmikroskop 1 der Figur 1 nun einen Kombinationsbetrieb, bei dem sowohl punkt- oder punktgruppenförmig eingestrahlte Anregungsstrahlung aus dem Strahlungsquellenmodul 2 als auch Weitfeldbeleuchtung aus der Halogenlampe 29 bzw. der Quecksilberdampflampe 34 auf die Probe 23 gerichtet wird und mittels des Scanners 18 und des Detektormoduls 5 eine entsprechend punkt- oder punktgruppenförmige Abtastung der derlei mehrfach bestrahlten Probe erreicht wird. Durch geeignete Wahl der Nebenfarbteiler 25 bis 25c kann somit die klassische Transmissions- oder Reflektionsmikroskopie mit Laserfluoreszenz-Messung kombiniert werden. Die so durch Abtastung mittels der Auswertung der Signale der Detektoren 28 bis 28c gewonnenen Bildinformationen können dann eigenständig oder überlagert ausgewertet bzw. dargestellt werden.

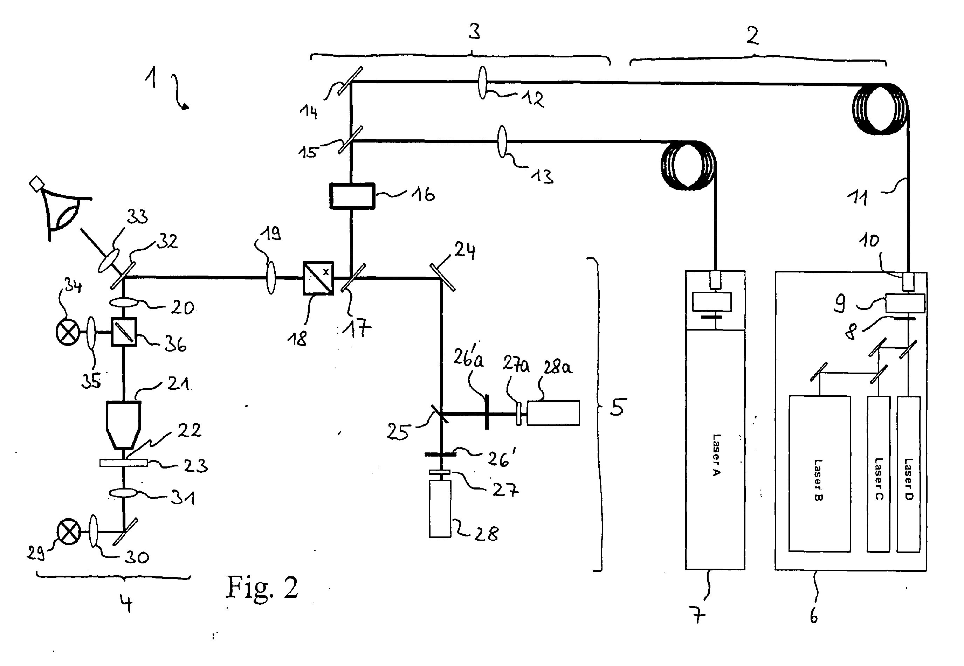

Die Bauweise der Figur 1 ist insbesondere hinsichtlich des Detektormoduls 5 lediglich beispielhaft zu verstehen. Figur 2 zeigte eine alternative Bauweise, bei der statt eines punktförmigen Fokus 22 eine linienförmige konfokale Abbildung verwendet wird. Dazu sind im Detektormodul 5, das beispielshalber nun mit zwei spektralen Kanälen ausgestattet ist, anstelle der Pinholeblenden 26 Schlitzblenden 26' vorgesehen.

Diese schlitzförmige teil-konfokale Abbildung bedarf natürlich auch einer entsprechenden Beleuchtung der Probe 23 durch das Laserstrahlungsmodul 3 mit einer Brennlinie. Den Strahlvereinigungsspiegeln 14 und 15 ist deshalb in der Bauweise der Figur 2 zusätzlich eine Strahlformungseinheit 16 nachgeordnet, die aus dem von den Lasern gelieferten rotationssymmetrischen, gaußförmig profilierten Laserstrahl einen zeilenförmigen Strahl, der nicht mehr rotationssymmetrisch ist, sondern im Querschnitt zur Erzeugung eines rechteckig beleuchteten Feldes geeignet ist, herstellt. Der Scanner 18 lenkt somit einen als zeilenförmig zu bezeichnenden Beleuchtungsstrahl als Anregungsstrahlung über die Probe 23 ab. Bei ausreichender Länge der Brennlinie kann der Scanner 18 dann, wie Figur 2 auch zeigt, auf eine einachsige Ablenkung beschränkt werden.

Die Verwendung einer konfokalen Schlitz-Apertur im Detektormodul 5 ist nur beispielhaft. Prinzipiell können beliebige Mehrpunktanordnungen, wie Punktwolken- oder Nipkow-Scheibenkonzepte, verwendet werden. Wesentlich ist allerdings, daß der Detektor 28 dann ortsauflösend ist, damit eine parallele Erfassung mehrerer Probenpunkte beim Durchlauf des Scanners erfolgt.

Durch dieses Konzept entfallen die im Stand der Technik bislang erforderlichen nichtdescannten Detektoren am Mikroskopmodul 4. Außerdem kann durch die konfokale Detektion eine hohe Ortsauflösung erreicht werden, die ansonsten bei nichtdescannter Detektion nur mit aufwendigen Matrixsensoren machbar wäre. Darüber hinaus können zeitliche Fluktuationen der einstrahlenden Weitfeldbeleuchtung, z.B. der Halogenlampe 29 oder der Quecksilberdampflampe 34 u.ä., können durch eine geeignete Integration im ortsauflösenden Detektor 28, 28a ausgeschaltet werden.

Für diese Betriebsart des Laserscanningmikroskops 1 ist natürlich der Hauptfarbteiler 17 sowie der Nebenfarbteiler 25 geeignet eingestellt. Dies ermöglicht es auch, beide Beleuchtungsarten, d.h. Weitfeldbeleuchtung von unten und Beleuchtung durch das Objektiv 21, gleichzeitig vorzunehmen, wenn die Farbteiler als geeignete Dichroiten ausgestaltet sind. Auch sind beliebige Kombinationen mit gescannter Beleuchtung aus dem Strahlungsquellenmodul 2 möglich. Eine entsprechende überlagerte grafische Darstellung der ausgewerteten Signale bietet dann eine gegenüber herkömmlichen Konzepten überragende Bildinformation.

Die Kombination einer konfokalen Mehrpunktabbildung, z. B. eines Linienscanners, mit einer spektralen mehrkanaligen Detektion ermöglicht eine hochparallele Datenaufnahme. Es ist eine Bildaufnahmerate von über 200 Bildern pro Sekunde erreichbar und eine Laserscanningmikroskopen bislang nicht realisierte Echtzeit-Fähigkeit gegeben. Alternativ ermöglicht das Laserscanningmikroskop 1 auch eine hochsensitive Detektion besonders schwacher Signalintensitäten. Verglichen mit einem konfokalen Einzel-Punkt-Laserscanningmikroskop ist bei gleicher Bildaufnahmezeit, bei gleicher in der Probe abgebildeter Fläche, bei gleichem Sehfeld und bei gleicher Laserleistung pro Pixel ein um einen Faktor √*n* verbessertes Signal-/Rauschverhältnis realisiert, wenn man mit n die Anzahl der Mehrpunktabbildungen bezeichnet. Bei einer Detektorzeile ist ein Wert von 500 bis 2.000 typisch.

Das Strahlquellenmodul 2 der Laserscanningmikroskops 1 erfüllt die dafür nötige Voraussetzung, nämlich daß die Mehrpunktbeleuchtung, z. B. die Beleuchtungszeile, die z. B. von der Strahlformungseinheit 16 bereitgestellt wird, die n-fache Leistung aufweist, wie der Laserfocus eines vergleichbaren konfokalen Einzel-Punktscanners.

Alternativ kann im Vergleich zum konfokalen Einzel-Punktscanner bei gleicher Bildaufnahmezeit und gleichem Signal-/Rauschverhältnis die Probenbelastung, d.h. die Strahlungsmenge der die Probe ausgesetzt wird und die zum Ausbleichen der Probe führen kann, um den Faktor n gesenkt werden, wenn die bislang in einem konfokalen Einzel-Punktscanner aufgewandte Strahlungsleistung nun auf mehrere Punkte, z. B. die Zeile verteilt wird.

Das mehrpunktabtastende Laserscanningmikroskop ermöglichst es also im Vergleich zum konfokalen Einzel-Punktscannern, intensitätsschwache Signale empfindlicher Probensubstanzen bei gleichen Signal-/Rauschverhältnis und gleicher Probenbelastung um den Faktor n schneller, bei gleicher Aufnahmezeit mit einem um den Faktor √*n* verbesserten Signal-/Rauschverhältnis oder bei gleiche Aufnahmezeit mit gleichem Signal-/Rauschverhältnis und einer um den Faktor n geringeren Probenbelastung abzubilden.

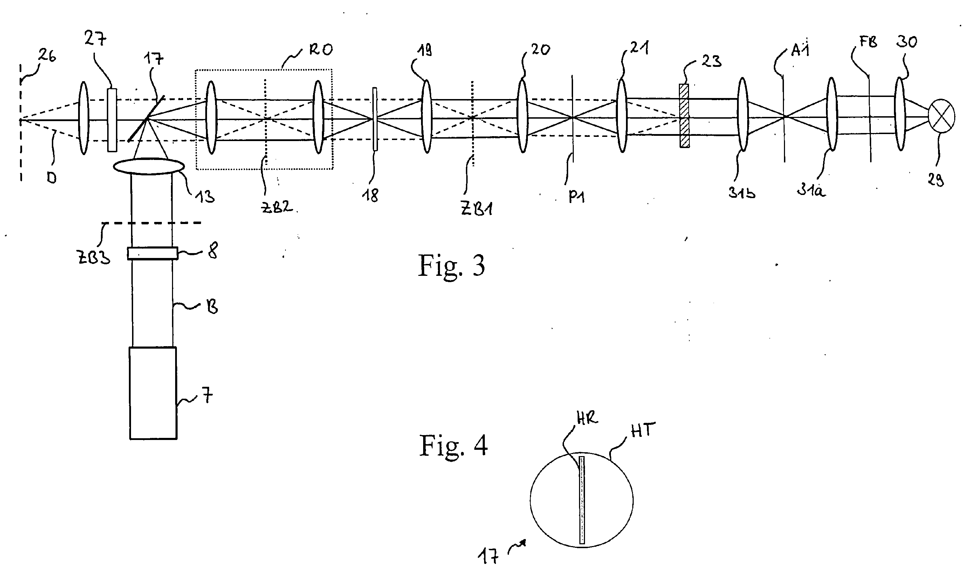

Figur 3 zeigt schematisch einen beispielhaften Strahlengang für das Laserscanningmikroskop 1 der Figur 1 oder 2 in Bauweise mit einem Linienscanner. Die Punktgruppe ist hier also als Zeile verwirklicht. Dementsprechend ist der beleuchtete Spot eine Linie. Wie in den Figuren 1 und 2 sind dort bereits erscheinende Bauteile mit denselben Bezugszeichen bezeichnet, weshalb bezüglich der Beschreibung zumindest teilweise auch auf die Figuren 1 und 2 verwiesen wird.

In Figur 3 ist der Beleuchtungsstrahlengang B mit durchgezogenen Linien veranschaulicht, wogegen der Detektionsstrahlengang D durch gestrichelte Linien symbolisiert ist. Figur 3 zeigt, daß die Probe 23 auf zwei Arten beleuchtet wird. Zum einen erfolgt über die Halogenlampe 29, die Lampenoptik 30 sowie den Kondensor 31, für den in Figur 3 zwei Optiken 31a, 31b eingezeichnet sind, eine Weitfeldbeleuchtung. Zum anderen bewirkt der Laser 7 eine linienförmige Beleuchtung, weshalb die Darstellung in Figur 3 in der gezeigten Schnittrichtung keinen Fokus in der Probe aufweist.

Der Scanner 18 lenkt eine Linie über die Probe 23 ab und bildet diese konfokal auf eine dem Spotbild zugeordnete konfokale Blende 26, die aufgrund des linienförmigen Spots als Schlitzblende ausgebildet ist. In der Probe 23 wird die Kohärenz der linienförmig einfallenden Anregungsstrahlung durch die Fluoreszenzanregung aufgehoben, da die Fluoreszenz ein inkohärenter Wechselwirkungsprozeß ist. Die Dimension der Farbstoffmoleküle liegt unterhalb der optischen Auflösung des Mikroskops. Jedes Farbstoffmolekül strahlt als Punktstrahler unabhängig von den anderen Probenorten und füllt die komplette Objektivpupille. Es ergibt sich der gestrichelt eingezeichnete Detektionsstrahlengang in Figur 3. Die derart als Brennlinie realisierbare spotförmige Beleuchtung wird über den Hauptfarbteiler 17 vom Detektionsstrahlengang D getrennt. Dieser Hauptfarbteiler ist als Streifenspiegel gemäß der DE 10257237 A1 in der vorliegenden Ausführungsform ausgeführt. Er ist in Draufsicht in Figur 4 gezeigt. Ein solcher Streifenspiegel, der einen hochreflektierenden Teil HR und einen hochtransmittierenden Teil HT aufweist, wirkt als spektral unabhängiger Hauptteiler. Er liegt, wie zu sehen ist, in einer Pupillenebene der Scananordnung, in der in der Probenebene reflektierte, d. h. kohärente Beleuchtungsstrahlung linienförmige (bei einem Einzelpunktdetektor punktförmig) fokussiert ist. Inkohärente, zu detektierende Signalstrahlung füllt dagegen die gesamte Pupillenebene aus und wird durch den hochreflektierenden Teil HT im wesentlichen transmittiert. Unter einem "Farbteiler" wird also im Sinne der Erfindung also auch ein nichtspektral wirkender Teiler verstanden.

Für die Weitfeldbeleuchtung ist zwischen Lampenoptik 30 und Kondensor 31a, 31b eine Feldblende vorgesehen, um den beleuchteten Bereich einstellen zu können. Weiter ist in den Kondensor 31 a, 31 b eine Aperturblende A1 schaltbar. Sie liegt in konjugierter Lage zu den Pupillenebenen des Laserscanningmikroskops. Bei diesen Pupillenebenen handelt es sich um die Pupillenebene P1, die Ebene, in der der Scanner 18 liegt sowie die Ebene, in der der Hauptfarbteiler 17 angeordnet ist. Als Aperturblende A1 sowie in der Pupillenebene P1 kann man nun verschiedene optische Elemente einsetzen, um aus der klassischen Mikroskopie bekannte Kontrastierungsmethoden zu verwenden, wie beispielsweise Dunkelfeld, Phasenkontrast, VAREL-Kontrast oder Differenzialinterferenzkontrast. Geeignete Aperturblenden A1 oder in die Pupillenebene P1 einzubringenden Elemente sind beispielsweise in der Publikation "Microscopy from the very beginning", Carl Zeiss Mikroskopie, D-07740 Jena, 1997, Seiten 18-23, erläutert sind. Der Offenbarungsgehalt dieser Firmenpublikation wird diesbezüglich explizit hier eingebunden. Für solche Kontrastierungseingriffe ist natürlich nicht nur die Pupillenebene P1 geeignet. Auch andere Pupillenebenen sind dazu tauglich.

Beispielsweise könnte der Eingriff auch in Nähe des Hauptfarbteilers 17 oder mittels einer Relayoptik nach dem Nebenfarbteiler 25 in einem (oder mehreren) spektralen Kanälen des Detektorstrahlenganges erfolgen.

Der Strahlengang der Figur 3 weist zusätzlich zu den anhand der Figuren 1 und 2 bereits geschilderten Elemente noch eine Relayoptik RO auf, die zusätzlich zu der Zwischenbildebene ZB1 zwischen Scannoptik 19 und Tubuslinse 20 eine weitere Zwischenbildebene ZB2 für den Beleuchtungsstrahlengang bereitstellt. Eine dritte Zwischenbildebene ZB3 des Beleuchtungsstrahlengangs findet sich vor dem Hauptteiler 17, so daß eine Pupillenebene für Farbteiler geschaffen ist. Will man den Aufbau kompakt halten, kann die Relayoptik RO auch entfallen.
Die beschriebene Erfindung stellt eine bedeutende Ausweitung der Anwendungsmöglichkeiten von schnellen konfokalen Laserscanmikroskopen dar. Die Bedeutung einer solchen Weiterentwicklung lässt sich anhand der zellbiologischen Standardliteratur und den dort beschriebenen schnellen zellulären und subzellulären Vorgängen¹ und den eingesetzten Untersuchungsmethoden mit einer Vielzahl von Farbstoffen² ablesen.
Siehe z.B.:
¹B. Alberts et al. (2002): Molecular Biology of the Cell; Garland Science.
^{1,2}G. Karp (2002): Cell and Molecular Biology: Concepts and Experiments; Wiley Text Books.
^{1,2}R. Yuste et al. (2000): Imaging neurons - a laboratory Manual; Cold Spring Harbor Laboratory Press, New York.
²R.P. Haugland (2003): Handbook of fluorescent Probes and research Products, 10th Edition; Molecular Probes Inc. and Molecular Probes Europe BV.

De Erfindung hat insbesondere große Bedeutung für die folgenden Prozesse und Vorgange:

### Entwicklung von Organismen

Die beschriebene Erfindung ist u.a. für die Untersuchung von Entwicklungsprozessen geeignet, die sich vor allem durch dynamische Prozesse im Zehntelsekunden bis hin zum Stundenbereich auszeichnen. Beispielanwendungen auf der Ebene von Zellverbänden und ganzen Organismen sind z.B. hier beschrieben:
■ Abdul-Karim, M.A. et al. beschreiben 2003 in Microvasc. Res., 66:113-125 eine Langzeitanalyse von Blutgefässveränderungen im lebenden Tier, wobei Fluoreszenzbilder in Intervallen über mehrere Tage aufgenommen wurde. Die 3D-Datensätze wurden mit adaptiven Algorithmen ausgewertet, um die Bewegungstrajektorien schematisch darzustellen.
■ Soll, D.R. et al. beschreiben 2003 in Scientific World Journ. 3:827-841 eine softwarebasierte Bewegungsanalyse von mikroskopischen Daten von Kernen und Pseudopodien lebender Zellen in allen 3 Raumdimensionen.
■ Grossmann, R. et al. beschreiben 2002 in Glia, 37:229-240 eine 3D-Analyse der Bewegungen von Mikrogliazellen der Ratte, wobei die Daten über bis zu 10 Stunden aufgenommen wurden. Gleichzeitig kommen nach traumatischer Schädigung auch schnelle Reaktionen der Glia vor, so dass eine hohe Datenrate und entsprechendes Datenvolumen entsteht.
Das betrifft insbesondere folgende Schwerpunkte:
- Analyse lebender Zellen in einer 3D Umgebung, deren Nachbarzellen empfindlich auf Laserbeleuchtung reagieren und die von der Beleuchtung der 3D-ROI geschützt werden müssen;
- Analyse lebender Zellen in einer 3D Umgebung mit Markierungen, die gezielt durch Laserbeleuchtung in 3D gebleicht werden sollen, z.B. FRET-Experimente;
- Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
- Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
- Gezielte Analyse lebender Zellen in einer 3D Umgebung mit Markierungen, die manipulationsbedingte Farbänderungen durch Laserbeleuchtung aufweisen, z.B. paGFP, Kaede;
- Gezielte Analyse lebender Zellen in einer 3D Umgebung mit sehr schwachen Markierungen, die z.B. eine optimale Balance von Konfokalität gegen Detektionsempfindlichkeit erfordern.
- Lebende Zellen in einem 3D-Gewebeverband mit variierenden Mehrfachmarkierungen, z.B. CFP, GFP, YFP, DsRed, HcRed u.ä.
- Lebende Zellen in einem 3D-Gewebeverband mit Markierungen, die funktionsabhängige Farbänderungen aufweisen, z.B. Ca+-Marker
- Lebende Zellen in einem 3D-Gewebeverband mit Markierungen, die entwicklungsbedingte Farbänderungen aufweisen, z.B. transgene Tiere mit GFP
- Lebende Zellen in einem 3D-Gewebeverband mit Markierungen, die manipulationsbedingte Farbänderungen durch Laserbeleuchtung aufweisen, z.B. paGFP, Kaede
- Lebende Zellen in einem 3D-Gewebeverband mit sehr schwachen Markierungen, die eine Einschränkung der Konfokalität zugunsten der Detektionsempfindlichkeit erfordern.
- Letztgenannter Punkt in Kombination mit den Vorangehenden.

### Transportvorgänge in Zellen

Die beschriebene Erfindung ist für die Untersuchung von innerzellulären Transportvorgängen exzellent geeignet, da hierbei recht kleine motile Strukturen, z.B. Proteine, mit hoher Geschwindigkeit (meist im Bereich von Hundertstelsekunden) dargestellt werden müssen. Um die Dynamik von komplexen Transportvorgängen zu erfassen, kommen oft auch Anwendungen wie FRAP mit ROI-Bleichen zum Einsatz. Beispiele für solche Studien sind z.B. hier beschrieben:
■ Umenishi, F. et al. beschreiben 2000 in Biophys J., 78:1024-1035 eine Analyse der räumlichen Beweglichkeit von Aquaporin in GFP-transfizierten Kulturzellen. Hierzu wurden in den Zellmembranen Punkte gezielt lokal gebleicht und die Diffusion der Fluoreszenz in der Umgebung analysiert.
■ Gimpl, G. et al. beschreiben 2002 in Prog. Brain Res., 139:43-55 Experimente mit ROI-Bleichen und Fluoreszenzimaging zur Analyse der Mobilität und Verteilung von GFP-markierten Oxytocin-Rezeptoren in Fibroblasten. Dabei stellen sich hohe Anforderungen an die räumliche Positionierung und Auflösung sowie die direkte zeitliche Folge von Bleichen und Imaging.
■ Zhang et al. beschreiben 2001 in Neuron, 31:261-275 live cell Imaging von GFP-transfizierten Nervenzellen, wobei die Bewegung von Granuli durch kombiniertes Bleichen und Fluoreszenzimaging analysiert wurde. Die Dynamik der Nervenzellen stellt dabei hohe Anforderungen an die Geschwindigkeit des Imaging.

### Wechselwirkungen von Molekülen

Die beschriebene Erfindung ist insbesondere für die Darstellung molekularer und anderer subzellulärer Wechselwirkungen geeignet. Hierbei müssen sehr kleine Strukturen mit hoher Geschwindigkeit (im Bereich um die Hundertstelsekunde) dargestellt werden. Um die für die Wechselwirkung notwendige räumliche Position der Moleküle aufzulösen, sind auch indirekte Techniken wie z.B. FRET mit ROI-Bleichen einzusetzen. Beispielanwendungen sind z.B. hier beschrieben:
■ Petersen, M.A. und Dailey, M.E. beschreiben 2004 in Glia, 46:195-206 eine Zweikanalaufnahme lebender Hippokampuskulturen der Ratte, wobei die zwei Kanäle für die Marker Lectin und Sytox räumlich in 3D und über einen längeren Zeitraum aufgezeichnet werden.
■ Yamamoto, N. et al. beschreiben 2003 in Clin. Exp. Metastasis, 20:633-638 ein Zweifarbimaging von humanen fibrosarcoma Zellen, wobei grünes und rotes fluoreszentes Protein (GFP und RFP) simultan in Echtzeit beobachtet wurde.
■ Bertera, S. et al. beschreiben 2003 in Biotechniques, 35:718-722 ein Multicolorimaging von transgenen Mäusen markiert mit Timer reporter Protein, welches seine Farbe nach Synthese von grün in rot ändert. Die Bildaufnahme erfolgt als schnelle Serie 3-dimensional im Gewebe am lebenden Tier.

### Signalübertragung zwischen Zellen

Die beschriebene Erfindung ist für die Untersuchung von meist extrem schnellen Signalübertragungsvorgängen hervorragend sehr gut geeignet. Diese meist neurophysiologischen Vorgänge stellen höchste Anforderungen an die zeitliche Auflösung, da die durch Ionen vermittelten Aktivitäten sich im Bereich von Hundertstel- bis kleiner als Tausendstelsekunden abspielen. Beispielanwendungen von Untersuchungen im Muskel- oder Nervensystem sind z.B. hier beschrieben:
■ Brum G et al. beschreiben 2000 in J Physiol. 528: 419-433 die Lokalisation von schnellen Ca+ Aktivitäten in Muskelzellen des Frosches nach Reizung mit Caffeine als Transmitter. Die Lokalisation und Mikrometer-genaue Auflösung gelang nur durch Einsatz eines schnellen, konfokalen Mikroskopes.
■ Schmidt H et al. beschreiben 2003 in J Physiol. 551:13-32 eine Analyse von Ca+ Ionen in Nervenzellfortsätzen von transgenen Mäusen. Die Untersuchung von schnellen Ca+-Transienten in Mäusen mit veränderten Ca+ bindenden Proteinen konnte nur mit hochauflösender konfokaler Mikroskopie durchgeführt werden, da auch die Lokalisation der Ca+ Aktivität innerhalb der Nervenzelle und deren genaue zeitliche Kinetik eine wichtige Rolle spielt.

## Patentansprüche

1. Lichtrastermikroskop, insbesondere konfokales Laserscanningmikroskop, mit
- einer Beleuchtungsanordnung (2), die einen linienförmigen Beleuchtungsstrahl zur Beleuchtung einer Probe (23) bereitstellt,
- einer Scananordnung (3, 4), die den linienförmigen Beleuchtungsstrahl scannend über die Probe (23) führt,
- einer Detektoranordnung (5), die über die Scananordnung (3,4) das beleuchtete Probengebiet (23) auf mindestens eine Detektoreinheit (28) abbildet, und
- einer Steuereinheit, die die Scananordnung (3, 4) ansteuert und die Detektoranordnung (5) ausliest,
**dadurch gekennzeichnet, daß**
zusätzlich eine Weitfeldbeleuchtungsquelle (29, 34) vorgesehen ist, die die Probe (23) beleuchtet, und daß die Steuereinheit bei Betrieb der Weitfeldbeleuchtungsquelle (29, 34) die Scananordnung (3, 4) so ansteuert und die Detektoranordnung (5) so ausliest, daß ein Bild der weitfeldbeleuchteten Probe (23) gewonnen ist.

2. Laserscanningmikroskop nach Anspruch 1, **dadurch gekennzeichnet, daß** die Weitfeldbeleuchtungsquelle (29) zur Transmissionsmessung eine Durchlichtbeleuchtung oder zur Fluoreszenzanregung eine Auflichtbeleuchtung der Probe (23) realisiert.

3. Laserscanningmikroskop nach einem der obigen Ansprüche, **dadurch gekennzeichnet, daß** die Spot-Detektoranordnung (5) mehrere spektrale Kanäle aufweist.

4. Laserscanningmikroskop nach Anspruch 3, **dadurch gekennzeichnet, daß** die Steuereinheit die Spot-Beleuchtungsanordnung (2) und die Weitfeldbeleuchtungsquellen (29, 34) simultan im Betrieb steuert und die spektralen Kanäle der Spot-Detektoranordnung ausliest.

5. Laserscanningmikroskop nach einem der obigen Ansprüche, **dadurch gekennzeichnet, daß** die Spotdetektoranordnung (5) mindestens eine Nipkovscheibe und mindestens einen Matrixdetektor aufweist.

6. Laserscanningmikroskop nach einem der Ansprüche 1 bis 4, **dadurch gekennzeichnet, daß** die Spotdetektoranordnung (5) mindestens eine Schlitzblende (26') und mindestens einen Zeilendetektor (28) aufweist.

7. Laserscanningmikroskop nach einem der obigen Ansprüche, **dadurch gekennzeichnet, daß** die Weitfeldbeleuchtungsquelle (29) einen Kondensor (31) aufweist, in den Kontrastierungsmittel A1 schaltbar sind.

8. Laserscanningmikroskop nach einem der obigen Ansprüche, **dadurch gekennzeichnet, daß** die Scananordnung ein Scanobjektiv (19) aufweist, das den Punkt- oder Punktgruppenspot aufweist, denen mindestens eine Pupillenebene P1 zugeordnet ist, in die Kontrastierungsmittel schaltbar sind.

9. Verfahren zur Laserscanningmikroskopie, wobei ein Bild einer Probe (23) durch Scannen und konfokaler Abbildung eines Punkt- oder Punktgruppenspots erzeugt wird und Mittel zur gescannten punkt- oder punktgruppenförmigen Probenbeleuchtung vorgesehen werden, **dadurch gekennzeichnet, daß** die Probe (23) weitfeldbeleuchtet wird und durch Scannen des Punkt- oder Punktgruppenspots abgebildet wird.

10. Verfahren nach Anspruch 9, **dadurch gekennzeichnet, daß** die Probe (23) mit der Weitfeldbeleuchtung durchleuchtet wird.

11. Verfahren nach einem der obigen Verfahrensansprüche, **dadurch gekennzeichnet, daß** die konfokale Abbildung spektral auflösend vorgenommen wird.

12. Verfahren nach Anspruch 11, **dadurch gekennzeichnet, daß** die Weitfeldbeleuchtung und die gescannte punkt- oder punkgruppenförmige Beleuchtung gleichzeitig vorgenommen werden.

13. Verfahren nach einem der obigen Verfahrensansprüche, **dadurch gekennzeichnet, daß** bei der konfokalen Abbildung mindestens Nipkov-Scheibe in Kombination mit mindestens einem Matrixdetektor oder mindestens einer Schlitzblende in Kombination mit mindestens einem Zeilendetektor verwendet wird.

14. Verfahren nach einem der obigen Verfahrensansprüche, **dadurch gekennzeichnet, daß** eine der folgenden Kontrastierungsmethoden verwendet wird: Dunkelfeldkontrast, Phasenkontrast, VAREL-Kontrast, Polarisationskontrast, Differentialinterferenzkontrast.

15. Verwendung von Anordnungen und/ oder Verfahren nach mindestens einem der vorangehenden Ansprüche zur Untersuchung von Entwicklungsprozessen , insbesondere dynamischer Prozesse im Zehntelsekunden bis hin zum Stundenbereich, insbesondere auf der Ebene von Zellverbänden und ganzen Organismen, insbesondere nach mindestens einem der folgenden Punkte:
• Analyse lebender Zellen in einer 3D Umgebung, deren Nachbarzellen empfindlich auf Laserbeleuchtung reagieren und die von der Beleuchtung der 3D-ROI geschützt werden müssen;
• Analyse lebender Zellen in einer 3D Umgebung mit Markierungen, die gezielt durch Laserbeleuchtung in 3D gebleicht werden sollen, z.B. FRET-Experimente;
• Analyse lebender Zellen in einer 3D Umgebung mit Markierungen, die gezielt durch Laserbeleuchtung gebleicht und gleichzeitig auch ausserhalb der ROI beobachtet werden sollen, z.B. FRAP- und FLIP-Experimente in 3D;
• Gezielte Analyse lebender Zellen in einer 3D Umgebung mit Markierungen und Pharmaka, die manipulationsbedingte Änderungen durch Laserbeleuchtung aufweisen, z.B. Aktivierung von Transmittern in 3D;
• Gezielte Analyse lebender Zellen in einer 3D Umgebung mit Markierungen, die manipulationsbedingte Farbänderungen durch Laserbeleuchtung aufweisen, z.B. paGFP, Kaede;
• Gezielte Analyse lebender Zellen in einer 3D Umgebung mit sehr schwachen Markierungen, die z.B. eine optimale Balance von Konfokalität gegen Detektionsempfindlichkeit erfordern.
• Lebende Zellen in einem 3D-Gewebeverband mit variierenden Mehrfachmarkierungen, z.B. CFP, GFP, YFP, DsRed, HcRed u.ä.
• Lebende Zellen in einem 3D-Gewebeverband mit Markierungen, die funktionsabhängige Farbänderungen aufweisen, z.B. Ca+-Marker
• Lebende Zellen in einem 3D-Gewebeverband mit Markierungen, die entwicklungsbedingte Farbänderungen aufweisen, z.B. transgene Tiere mit GFP
• Lebende Zellen in einem 3D-Gewebeverband mit Markierungen, die manipulationsbedingte Farbänderungen durch Laserbeleuchtung aufweisen, z.B. paGFP, Kaede
• Lebende Zellen in einem 3D-Gewebeverband mit sehr schwachen Markierungen, die eine Einschränkung der Konfokalität zugunsten der Detektionsempfindlichkeit erfordern.
• Letztgenannter Punkt in Kombination mit den Vorangehenden.

16. Verwendung von Anordnungen und/ oder Verfahren nach mindestens einem der vorangehenden Ansprüche für die Untersuchung von innerzellulären Transportvorgängen , insbesondere zur Darstellung kleine motile Strukturen, z.B. Proteine, mit hoher Geschwindigkeit (meist im Bereich von Hundertstelsekunden) insbesondere für Anwendungen wie FRAP mit ROI-Bleichen

17. Verwendung von Anordnungen und/ oder Verfahren nach mindestens einem der vorangehenden Ansprüche für die Darstellung molekularer und anderer subzellulärer Wechselwirkungen ,insbesondere der Darstellung sehr kleine Strukturen mit hoher Geschwindigkeit vorzugsweise unter Verwendung indirekter Techniken wie z.B. FRET mit ROI-Bleichen zur Auflösung submolekularar Strukturen

18. Verwendung von Anordnungen und/ oder Verfahren nach mindestens einem der vorangehenden Ansprüche schnellen Signalübertragungsvorgängen , insbesondere neurophysiologischen Vorgängen mit hoher zeitlicher Auflösung, da die durch Ionen vermittelten Aktivitäten sich im Bereich von Hundertstel- bis kleiner als Tausendstelsekunden abspielen, insbesondere bei Untersuchungen im Muskel- oder Nervensystem
